(19) Europäisches Patentamt
European Patent Office
Office européen des brevets

(11) **EP 3 822 844 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(51) Internationale Patentklassifikation (IPC):
**G06K 7/10** (2006.01)     **G06K 7/12** (2006.01)

(52) Gemeinsame Patentklassifikation (CPC):
**G06K 7/10722; G06K 7/10841; G06K 7/12**

(21) Anmeldenummer: **20204188.5**

(22) Anmeldetag: **27.10.2020**

(54) **CODELESER UND VERFAHREN ZUM LESEN VON OPTISCHEN CODES**
CODE READER AND METHOD FOR READING OPTICAL CODES
LECTEUR DE CODES ET PROCÉDÉ DE LECTURE DE CODES OPTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2019 DE 102019130865**

(43) Veröffentlichungstag der Anmeldung:
**19.05.2021 Patentblatt 2021/20**

(73) Patentinhaber: **SICK AG**
**79183 Waldkirch (DE)**

(72) Erfinder:
- **Müller, Romain**
  **79252 Stegen (DE)**
- **Schneider, Florian**
  **79276 Reute (DE)**
- **Nopper, Richard**
  **79261 Gutach (DE)**

(56) Entgegenhaltungen:
**EP-A1- 3 383 026     EP-A2- 2 261 837**
**US-A1- 2004 196 514**

**Beschreibung**

Die Erfindung betrifft einen Codeleser und ein Verfahren zum Lesen von optischen Codes nach dem Oberbegriff von Anspruch 1 beziehungsweise 13.

Für die Automatisierung von logistischen Anwendungen, beispielsweise das automatische Sortieren von Objekten, werden Objekte mit einem Code versehen, die von einem Codeleser ausgelesen werden. Eine häufige praktische Anwendung sind Barcodes mit entsprechenden Barcodescannern. Zur Identifizierung werden aber auch andere Kodierungen verwendet, etwa zweidimensionale Codes wie ein Maxicode oder ein Aztec-Code, oder Beschriftungen, die mit einer Texterkennung (OCR) dekodiert werden. Um solche Codes zu lesen, werden Bilder der Objekte mit den Codes aufgenommen.

In einer automatisiert arbeitenden Lesevorrichtung, etwa bei einer Gepäckabfertigung in Flughäfen oder der automatisierten Sortierung von Paketen in Logistikzentren, werden die Objekte an dem Codeleser vorbei gefördert und Bilddaten der Objekte mit den darauf angeordneten Codes durch zeilenweise Abtastung gewonnen. Die einzelnen Bildzeilen werden anhand der bekannten oder gemessenen Bandgeschwindigkeit zusammengesetzt. Zeilenkameras erreichen eine hohe Auflösung und Geschwindigkeit.

Typischerweise nehmen die Zeilenkameras ein monochromes Bild auf, das auch als Grauwertbild oder Schwarz-Weiß-Bild bezeichnet wird. Damit wird die beste Photonenausbeute und daher das beste Signal-Rausch-Verhältnis erreicht, und Farberfassung ist für das Lesen von Codes, die ohnehin nur helle und dunkle Bereiche aufweisen, nicht interessant.

Sollen doch Farbinformationen gewonnen werden, so wird in der Regel auf Matrixkameras zurückgegriffen. Gerade bei schnellen Bandapplikationen hat das aber Nachteile, da eine hohe Framerate benötigt wird und das Zusammenfügen von deren Einzelbildern (Stitching) im Gegensatz zum einfachen Aneinanderreihen von Bildzeilen sehr rechenaufwändig wird. Außerdem kann ein Matrixbildsensor in Zeilenrichtung nicht dieselbe Pixelanzahl erreichen wie ein Zeilenbildsensor.

Die verbreitetste Art, einen Matrixbildsensor zur Farbgewinnung auszubilden, ist das pixelweise Vorsehen von jeweils zwei grünen, einem roten und einem blauen Filter in einem Bayer-Pattern. Es gibt jedoch auch alternative Farbmuster, die beispielsweise einen Weißkanal hinzufügen (RGBW) oder subtraktive Grundfarben verwenden, etwa rot, gelb und blau (RYBY).

Auch Farbzeilenkameras sind bekannt. Sie besitzen beispielsweise drei Zeilen in rot, grün und blau (RGB), eine alternierende Anordnung dieser Grundfarben auf einer einzigen Zeile oder in Nachahmung des Bayer-Patterns eine Zeile mit alternierenden roten und blauen Pixeln und eine zweite rein grüne Zeile.

Nachteilig an allen diesen Farbbildsensoren ist, dass durch die Farbfilter Empfangslicht verloren geht und daher ein Schwarz-Weiß-Bild für das Codelesen überlegen bleibt. Die Farbinformation kann also nur um den Preis einer schlechteren Leistung beim Codelesen gewonnen werden.

Die DE 10 2015 116 568 A1 offenbart eine Farberfassung durch die Kombination einer monochromen Kamera mit einem durchstimmbaren Farbfilter. Das würde das Problem nicht lösen, weil weiterhin in jeder einzelnen Farbeinstellung Licht verlorengeht und letztlich bestenfalls die genannten Lösungen mit Zeilenkameras aus mehreren Zeilen für verschiedene Farben emuliert werden.

In der EP 3 012 778 A2 ist eine Doppelzeilenkamera beschrieben, die mit einer multispektralen Beleuchtung betrieben wird. Das ist effektiv auch nichts anderes als ein Farbfilter, der nun an anderer Stelle erzeugt wird, aber nicht den Lichtverlust für ein Codelesen verhindert.

Die EP 3 383 026 A1 befasst sich mit einer weiteren Doppelzeilenkamera, die mittels Empfangsoptik für einen lateralen Versatz der beiden aufgenommenen Bildzeilen sorgt und damit die Auslösung erhöht. Dabei wird die Möglichkeit von Farbfiltern der Empfangsoptik erwähnt, um beispielsweise gestaffelte, zueinander versetzte rote, grüne und blaue Zeilen insbesondere in Kombination mit mindestens einer weiteren Zeile ohne Farbfilter für eine Grauwertaufnahme zu verwirklichen, wobei die Farbfilter auch innerhalb einer Zeile variieren können.

Aus der EP 2 261 837 A2 ist ein codelesendes Gerät bekannt, das Bilder mit einer Pixelmatrix aufnimmt. Die meisten Pixel sind monochrom, in einer Gitteranordnung sind farbige Pixel eingestreut. Diese farbigen Pixel bilden ein Bayerpattern.

Aus der US 2004/0196514 A1 ist ein Bildsensor für zahlreiche Anwendungen einschließlich derjenigen als Barcodeleser bekannt, der vier Zeilen mit Photodioden für rot, grün, blau und monochrom umfasst und

Es ist daher Aufgabe der Erfindung, das Lesen von Codes mit einer Zeilenkamera zu verbessern.

Diese Aufgabe wird durch einen Codeleser und ein Verfahren zum Lesen von optischen Codes nach Anspruch 1 beziehungsweise 13 gelöst. Der Codeleser umfasst einen zeilenförmigen Bildsensor mit mehreren Zeilenanordnungen von Lichtempfangspixeln. Mit mehreren Zeilenanordnungen ist eine geringe Anzahl jedenfalls kleiner zehn gemeint, die Auflösung in Zeilenrichtung und damit die Anzahl Lichtempfangspixel in Zeilenrichtung ist um Größenordnungen höher und beträgt mehrere hundert, tausend oder mehr. De Codeleser also als Zeilenkamera ausgebildet. Eine Steuer- und Auswertungseinheit liest die Bilddaten aus, findet Codebereiche darin und liest deren Codeinformation aus. Die Lichtempfangspixel haben unterschiedliche spektrale Empfindlichkeiten, insbesondere durch Farbfilter beziehungsweise das Weglassen davon.

Die Erfindung geht von dem Grundgedanken aus, zur Aufnahme eines Grauwertbildes beziehungsweise eines Schwarz-Weiß-Bildes mindestens eine Zeilenanordnung als weiße Zeile auszubilden. Deren Lichtempfangspixel sind für weißes Licht empfindlich, was bedeuten soll, dass sie das ganze optische Spektrum wahrnehmen und beispielsweise keine Farbfilter aufweisen. Die Grenze des empfangenen Lichts bilden natürlich die unvermeidbaren Hardwarebeschränkungen der verwendeten Kamerapixel. Die übrigen Zeilenanordnungen sind farbige Zeilen für die Aufnahme eines Farbbildes, deren Empfangspixel für nur jeweils eine Farbe empfindlich sind. Die Verteilung der Farben innerhalb der mindestens einen farbigen Zeile kann gleich oder ein Muster sein, dies unterscheidet sich je nach Ausführungsform. Prinzipiell könnten in eine farbige Zeile nochmals weiße Pixel eingestreut sein, aber für solche Bildinformationen ist an sich die weiße Zeile zuständig.

Die Erfindung hat den Vorteil, dass mit der mindestens einen weißen Zeile ein Grauwertbild oder Schwarz-Weiß-Bild in voller Auflösung bei hohen Kontrasten und bestmöglichem Signal-Rausch-Verhältnis erfasst wird. Zugleich wird mit der farbigen Zeile oder den farbigen Zeilen, unter Umständen im Zusammenspiel mit der weißen Zeile, eine Farbinformation gewonnen, die für verschiedene Zusatzauswertungen verwendet werden kann. Diese zusätzliche Farberfassung geht dank der weißen Zeile nicht zulasten der Auflösung oder des Signal-Rausch-Verhältnisses.

Die Steuer- und Auswertungseinheit setzt vorzugsweise nacheinander während einer Relativbewegung zwischen Codeleser und Code aufgenommene Bildzeilen zu einem Gesamtbild zusammen. Bei Barcodes ist alternativ ein Codelesen aus einer einzigen zeilenförmigen Aufnahme denkbar, aber vorzugsweise werden auch Barcodes aus einem derart zusammengesetzten, flächigen Gesamtbild gelesen.

Die Steuer- und Auswertungseinheit ist bevorzugt dafür ausgebildet, das Grauwertbild der weißen Zeile zum Lesen der Codes zu verwenden. Das Grauwertbild hat die volle Auflösung und das bestmögliche Signal-Rauchverhältnis, so dass Codelesen mit gleicher Qualität möglich ist wie mit einer herkömmlichen monochromen Zeilenkamera. Zugleich werden Farbinformationen geliefert, ohne das Decodierergebnis zu beeinträchtigen. Diese Farbinformationen können für beliebige, aber auch für mit dem Codelesen verbundene Funktionen genutzt werden, beispielsweise ein anfängliches Segmentieren beziehungsweise Auffinden von Codebereichen.

Die Steuer- und Auswertungseinheit ist bevorzugt dafür ausgebildet, das Grauwertbild und ein Farbbild zu erzeugen. Damit sind beide Bilder für das Decodieren oder sonstige Funktionen verfügbar.

Bevorzugt sind zwei, drei oder vier Zeilenanordnungen vorgesehen, von denen ein oder zwei Zeilenanordnungen weiße Zeilen sind. Die genannten Zahlen sind hier genaue Angaben, keine Mindestangaben. Mit wenigen Zeilenanordnungen wird ein besonders kompakter Aufbau des Bildsensors erreicht. Die minimale Ausführungsform ist eine Doppelzeile mit einer weißen und einer farbigen Zeile. Um eine höhere Auflösung des Farbbildes in Zeilenrichtung zu erreichen, sind bevorzugt zumindest zwei farbige Zeilen vorgesehen.

Die farbigen Zeilen weisen bevorzugt Lichtempfangspixel auf, die für jeweils eine von zwei Grundfarben empfindlich sind, und keine Lichtempfangspixel, die für die dritte Grundfarbe empfindlich sind. Grundfarben sind die additiven Grundfarben rot, grün und blau beziehungsweise die subtraktiven Grundfarben blaugrün (cyan), purpur (magenta) und gelb. Indem nur zwei davon vorgesehen sind, werden Lichtempfangspixel und Zeilenanordnungen eingespart. Alternativ wäre denkbar, dass alle drei jeweiligen Grundfarben vorhanden sind (RGBW, CMYW).

Die Steuer- und Auswertungseinheit ist bevorzugt dafür ausgebildet, die dritte Grundfarbe mit Hilfe der weißen Zeile aus den zwei Grundfarben zu rekonstruieren. Die weiße Zeile nimmt eine Überlagerung aller Grundfarben auf, so dass die dritte Grundfarbe isoliert werden kann, wenn die beiden anderen Grundfarben aufgenommen werden.

Die zwei Grundfarben sind bevorzugt rot und blau. Die Aufnahme von additiven Grundfarben führt zu besseren Ergebnissen. Gerade das im Bayer-Pattern doppelt vorgesehene grün wird in dieser bevorzugten Ausführungsform nicht aufgenommen, so dass hierfür keine Lichtempfangspixel und Zeilenanordnungen vorgesehen sein müssen. Bei Bedarf wird grün aus der weißen Zeile und den roten und blauen Farbinformationen erzeugt.

Die Lichtempfangspixel innerhalb einer farbigen Zeile sind bevorzugt für dieselbe Farbe empfindlich. Mit anderen Worten ist die ganze farbige Zeile einheitlich, beispielsweise eine rote Zeile oder eine blaue Zeile. Damit wird die entsprechende Farbinformation in voller Auflösung erfasst. Die Lichtempfangspixel innerhalb einer farbigen Zeile können auch für unterschiedliche Farben empfindlich sein, insbesondere in alternierender Reihenfolge wie rot-blau-rot-blau. Weiterhin ist denkbar, einheitlich farbige Zeilen und gemischt farbige Zeilen miteinander zu kombinieren.

Die Steuer- und Auswertungseinheit ist bevorzugt für eine Farbkorrektur ausgebildet, bei der die Signale der zu dem Farbbild beitragenden Lichtempfangspixel je nach Farbe unterschiedlich gewichtet werden. Dadurch wird eine möglichst treue Farbaufnahme erreicht, die zudem spektrale Eigenschaften der Beleuchtung oder des Umgebungslichts berücksichtigen kann. In diesem speziellen Zusammenhang wird auch die mit der weißen Zeile erfasste Bildinformation als Farbe betrachtet, wird also ebenfalls gewichtet, falls die weiße Zeile für die Gewinnung der Farbinformation mit herangezogen wird.

Die Gewichtung wird bevorzugt durch unterschiedliche Verstärkungsfaktoren der Zeilenanordnungen eingestellt. Dazu ist besonders vorteilhaft, wenn einheitliche farbige Zeilen vorgesehen sind, beispielsweise eine rote Zeile und eine blaue Zeile. Dann kann das jeweilige Gewicht durch einen einzigen gemeinsamen Verstärkungsfaktor für die gesamte Zeilenanordnung und insbesondere schon auf Hardwareebene eingestellt werden. Das wäre beispielsweise bei einem Bayer-Pattern nur durch individuelle Verstärkungsfaktoren für die jeweiligen Pixel mit ungeheurem Schaltungsaufwand denkbar.

Alternativ wird die Gewichtung durch Nachbearbeitung eingestellt. Dazu werden beispielsweise entsprechende Gewichtungsfaktoren kalibriert und in einer Matrix zusammengefasst. Es ist auch denkbar, ein neuronales Netz mit den gemessenen Werten der Lichtempfangspixel der unterschiedlichen Farben und den tatsächlichen Farben zu trainieren, die beispielsweise als Referenzmuster oder über einen weiteren farbkalibrierten Sensor bekannt sind, und dann im Betrieb für die Farbkorrektur zu nutzen.

Die Steuer- und Auswertungseinheit ist bevorzugt dafür ausgebildet, codetragende Objekte und/oder Codebereiche anhand des Farbbildes zu erkennen, zu klassifizieren und/oder vom Bildhintergrund zu unterscheiden. Dies sind einige Beispiele für die Verwendung des Farbbildes zur Unterstützung des Codelesens. Häufig unterscheidet sich der Untergrund des Codes farblich von der Umgebung, oder die Farbinformation kann dafür verwendet werden, ein codetragendes Objekt zu erkennen und vom Hintergrund zu trennen. Alternativ wird das Farbbild für irgendeine andere Funktion genutzt, insbesondere als solches ausgegeben und erst nachgelagert verwendet, sei es für Visualisierungs- und Diagnosefunktionen oder ganz andere Zusatzaufgaben. Der erfindungsgemäße Codeleser vereint die beiden Funktionen Aufnahme eines für Codelesen besonders geeigneten Grauwertebildes und eines für unterstützende oder andere Zwecke nutzbaren Farbbildes in einem Gerät, wobei die Primärfunktion Codelesen durch die zusätzliche Farbbildaufnahme nicht beeinträchtigt wird.

Das Farbbild weist bevorzugt eine geringere Auflösung auf als das Graubild. Für das Codelesen steht bereits das hochaufgelöste Grauwertbild der weißen Zeile zur Verfügung. Die geringere Auflösung kann bereits originär durch weniger oder größere Lichtempfangspixel einer jeweiligen Farbe in Zeilenrichtung entstehen. Alternativ findet ein Binning oder Downsampling auf Hardwareebene oder Softwareebene statt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Schnittdarstellung eines Codelesers;

Fig. 2    eine dreidimensionale Ansicht einer Anwendung des Codelesers in fester Montage über einem Förderband mit codetragenden Objekten;

Fig. 3    eine schematische Darstellung eines zeilenförmigen Bildsensors mit einer roten, einer blauen und einer weißen Zeile;

Fig. 4    eine schematische Darstellung eines zeilenförmigen Bildsensors mit einer roten, einer blauen und zwei weißen Zeilen;

Fig. 5    eine schematische Darstellung eines zeilenförmigen Bildsensors mit einer alternierend rotblauen und einer weißen Zeile; und

Fig. 6    eine schematische Darstellung eines zeilenförmigen Bildsensors mit zwei alternierend rote-blauen und zwei weißen Zeilen.

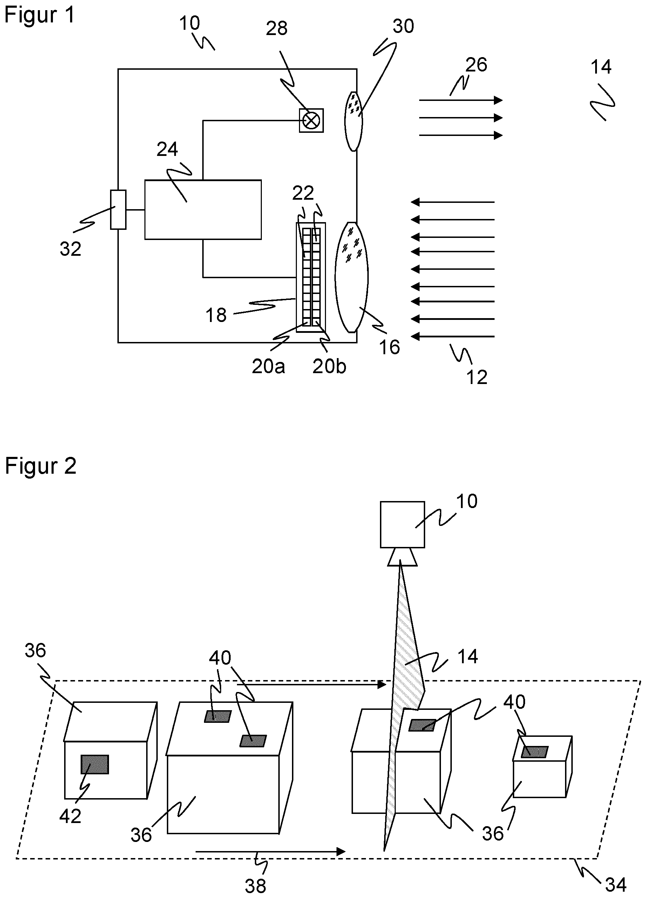

Figur 1 zeigt eine sehr vereinfachte Blockdarstellung eines Codelesers 10. Der Codeleser 10 erfasst Empfangslicht 12 aus einem Erfassungsbereich 14 durch ein Aufnahmeobjektiv 16, das hier nur durch eine einfache Linse repräsentiert ist. Ein zeilenförmiger Bildsensor 18 erzeugt Bilddaten des Erfassungsbereichs 14 und der dort gegebenenfalls vorhandenen Objekte und Codebereiche. Der Bildsensor 18 weist zumindest zwei Zeilen 20a-b von lichtempfindlichen Empfangspixeln 22 auf, wobei in Zeilenrichtung eine Vielzahl von hunderten, tausenden oder noch mehr Empfangspixeln 22 vorgesehen sind.

Die Bilddaten des Bildsensors 18 werden von einer Steuer- und Auswertungseinheit 24 ausgelesen. Die Steuer- und Auswertungseinheit 24 ist auf einem oder mehreren digitalen Bausteinen implementiert, beispielsweise Mikroprozessoren, ASICs, FPGAs oder dergleichen, die auch ganz oder teilweise außerhalb des Codelesers 10 vorgesehen sein können. Ein bevorzugter Teil der Auswertung besteht darin, erfasste Bildzeilen zu einem Gesamtbild aneinanderzureihen. Ansonsten können bei der Auswertung die Bilddaten vorbereitend gefiltert, geglättet, helligkeitsnormiert, auf bestimmte Bereiche zugeschnitten oder binarisiert werden. Dann erfolgt typischerweise eine Segmentierung, in der einzelne Objekte und Codebereiche aufgefunden werden. Die Codes in diesen Codebereichen werden dann decodiert, also die in den Codes enthaltene Information ausgelesen.

Um den Erfassungsbereich 14 mit Sendelicht 26 ausreichen hell auszuleuchten, ist eine Beleuchtungseinrichtung 28 mit einer Sendeoptik 30 vorgesehen, die abweichend von der Darstellung auch extern sein kann. An einer Schnittstelle 32 des Codelesers 10 können Daten ausgegeben werden, und zwar sowohl gelesene Codeinformationen als auch sonstige Daten in verschiedenen Verarbeitungsstufen, wie Rohbilddaten, vorverarbeitete Bilddaten, identifizierte Objekte oder noch nicht decodierte Codebilddaten. Umgekehrt ist möglich, den Codeleser 10 über die Schnittstelle 32 oder eine weitere Schnittstelle zu parametrieren.

Figur 2 zeigt eine mögliche Anwendung des Codelesers 10 in Montage an einem Förderband 34, welches Objekte 36 in einer Förderrichtung 38, wie durch den Pfeil angedeutet, durch den Erfassungsbereich 14 des Codelesers 10 fördert. Die Objekte 36 können an ihren Außenflächen Codebereiche 40 tragen. Aufgabe des Codelesers 10 ist, die Codebereiche 40 zu erkennen, die dort angebrachten Codes auszulesen, zu dekodieren und dem jeweils zugehörigen Objekt 36 zuzuordnen. Um auch seitlich angebrachte Codebereiche 42 zu erkennen, werden vorzugsweise mehrere Codeleser 10 aus unterschiedlicher Perspektive eingesetzt. Es kann zusätzliche Sensoren geben, beispielsweise einen vorgelagerten Laserscanner zur Erfassung der Geometrie der Objekte 36 oder einen Inkrementalgeber zur Erfassung der Geschwindigkeit des Förderbandes 34.

Der Erfassungsbereich 14 des Codelesers 10 ist entsprechend dem zeilenförmigen Bildsensor 18 eine Ebene mit einem zeilenförmigen Lesefeld. Indem die Objekte 36 in der Förderrichtung 38 zeilenweise aufgenommen werden, entsteht nach und nach ein Gesamtbild der vorbeigeförderten Objekte 36 samt der Codebereiche 40. Die Zeilen 22a-b liegen dabei so nahe beieinander, dass sie praktisch den gleichen Objektabschnitt erfassen. Alternativ könnte ein Versatz auch rechnerisch kompensiert werden.

Der Codeleser 10 erfasst mit einem Bildsensor 18 einerseits ein Grauwertbild oder Schwarz-Weiß-Bild, das für das Codelesen genutzt wird. Zusätzlich wird auch eine Farbinformation beziehungsweise ein Farbbild gewonnen. Die Farbinformation kann für eine Vielzahl von Zusatzfunktionen genutzt werden. Ein Beispiel ist die Klassifizierung von Objekten 36, etwa um herauszufinden, ob es sich um ein Paket, einen Briefumschlag oder einer Tüte handelt. Es kann festgestellt werden, ob ein Förderbandbehältnis leer ist, wie eine Schale eines Schalenförderers oder eine Kiste. Das Segmentieren der Bilddaten in Objekte 36 oder Codebereiche 40 kann anhand der Farbinformation vorgenommen oder davon unterstützt werden. Es können zusätzliche Bilderkennungsaufgaben gelöst werden, wie die Erkennung bestimmter Aufdrucke oder Aufkleber beispielsweise zur Gefahrgutkennzeichnung, oder Schriften gelesen werden (OCR, Optical Character Recognition).

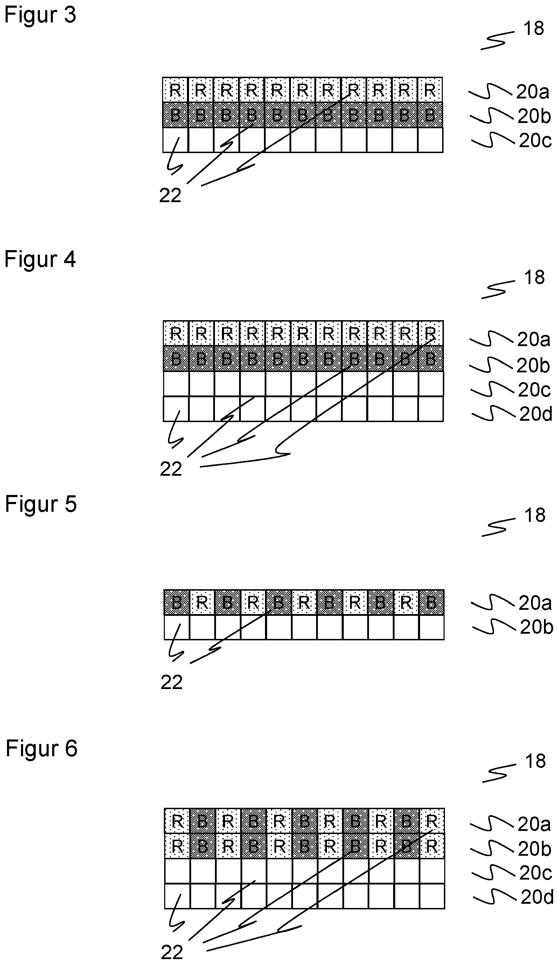

Die Figuren 3 bis 6 zeigen einige Beispiele von Ausführungsformen des Bildsensors 18 für eine solche Erfassung von Schwarz-Weiß-Bildern und Farbinformationen. Gemeinsam ist diesen Ausführungsformen, dass zumindest eine der Zeilen 20a-d eine weiße Zeile ist, deren Empfangspixel 22 in den Grenzen der Hardware Licht über das gesamte Spektrum erfassen. Zumindest eine weitere Zeile 20a-d ist eine farbige Zeile, deren Empfangspixel 22 nur für eine bestimmte Farbe empfindlich sind, insbesondere durch entsprechende Farbfilter. Die Verteilung der Farben über die jeweiligen Empfangspixel 22 der farbigen Zeilen unterscheidet sich je nach Ausführungsform, weicht jedoch von dem üblichen RGB und insbesondere einem Bayer-Pattern ab.

Figur 3 zeigt eine Ausführungsform mit je einer roten Zeile 20a, einer blauen Zeile 20b und einer weißen Zeile 20c. Die Zeilen 20a-c sind also in sich homogen und die Empfangspixel 22 innerhalb einer Zeile 20a-c für ein gleiches optisches Spektrum empfindlich. Figur 4 zeigt eine Variante mit einer zusätzlichen weißen Zeile 20d.

In der Ausführungsform nach Figur 5 sind für rot und für blau empfindliche Empfangspixel 22 innerhalb einer farbigen Zeile 20a alternierend gemischt. Dadurch ist in Kombination mit einer weißen Zeile 20b ein Aufbau mit insgesamt nur zwei Zeilen möglich. Figur 6 zeigt eine Variante, in der sowohl die farbige Zeile 20a-b als auch die weiße Zeile 20c-d gedoppelt ist.

Diese Beispiele sind nur eine Auswahl basierend auf den Grundfarben rot und blau mit weiß (RBW). Weitere Ausführungsformen nutzen andere Farbfilter und Farben. So wäre auch die Verwendung von grün mit rot oder blau (RGW, BGW) oder aller drei Grundfarben (RGBW) denkbar. Weiterhin kommen auch die subtraktiven Grundfarben blau-grün (cyan), purpur (magenta) und gelb in analogen Kombinationen in Betracht (CMW, CYW, MYW oder CMYW).

Allgemein sollten die Farbfilter Korrekturen auf Pixellevel berücksichtigen, wie Fixed Pattern Noise. Für Unterschiede in den Farbkanälen insgesamt ist ein Farbabgleich möglich, der von der konkreten Umgebung abhängen kann, wie Beleuchtung, Lesefeld und Leseabstand. Das ist beispielsweise durch eine Farbkorrekturmatrix

$$\begin{array}{c} R' \\ G' = \\ B' \end{array} \begin{pmatrix} x1 & x2 & x3 \\ x4 & x5 & x6 \\ x7 & x8 & x9 \end{pmatrix} * \begin{array}{c} R \\ G \\ B \end{array}$$

möglich, deren Koeffizienten durch eine Farbkalibration bestimmt werden. Die Korrekturmatrix ist für RGB angegeben, wobei beispielsweise R und B gemessen und G aus W-R-B rekonstruiert sein kann. Für die anderen oben angegebenen Farbkombinationen sind entsprechende Korrekturmatrizen möglich.

Alternativ oder zusätzlich wird ein neuronales Netz insbesondere mit mehreren versteckten Ebenen eingesetzt. Als Eingang wird ein roher oder vorkorrigierter Farbvektor vorgegeben, und das neuronale Netz liefert einen korrigierten Farbvektor zurück. Algorithmen oder neuronale Netze können zudem verwendet werden, um das Signal-Rausch-Verhalten durch Berücksichtigung der Farbwerte der benachbarten Pixel zu verbessern.

In den Ausführungsbeispielen der Figuren 3 bis 6 werden zunächst nur in den zwei Grundfarben rot und blau bestimmt. Ist eine Repräsentation der Farbe in RGB-Werten erwünscht, so lässt sich die fehlende Farbe grün durch G=W-R-B oder allgemeiner eine Funktion f(W, R, B) zumindest annähernd rekonstruieren. Dazu sollte ein Abgleich zwischen den verschiedenen Eingangskanälen rot, blau und weiß vorgenommen werden. Das ist vor allem dann erforderlich, wenn die farbigen Zeilen absichtlich mit höherer Verstärkung betrieben werden, um die Auswirkungen der im Vergleich zu der weißen Zeile geringere Photonenausbeute zu begrenzen.

Während für das Codelesen die hohe Auflösung der weißen Zeile erwünscht ist, werden in vielen Fällen die Farbinformationen nur in geringerer Auflösung benötigt. Daher ist ein gewisser Auflösungsverlust in den farbigen Zeilen wie in Figur 5 unter Umständen gar nicht störend. In manchen Fällen ist sogar denkbar, die Auflösung durch das Zusammenlegen von Pixeln künstlich zu verringern (Binning, Downsampling) und so das Signal-Rausch-Verhältnis zu verbessern.

## Patentansprüche

1. Codeleser (10) zum Lesen eines optischen Codes (40), der einen zeilenförmigen Bildsensor (18) mit mehreren Zeilenanordnungen (20a-d) von Lichtempfangspixeln (22) zum Aufnehmen von Bilddaten mit dem Code (40) und eine Steuer- und Auswertungseinheit (24) aufweist, die dafür ausgebildet ist, den Code (40) in den Bilddaten aufzufinden und auszulesen, wobei die Lichtempfangspixel (22) eine unterschiedliche spektrale Empfindlichkeit aufweisen, wobei mindestens eine Zeilenanordnung (20a-d) eine weiße Zeile ist, deren Empfangspixel (22) zur Aufnahme eines Grauwertbildes für weißes Licht empfindlich sind, und die übrigen Zeilenanordnungen (20a-d) farbige Zeilen sind, deren Empfangspixel (22) zur Aufnahme eines Farbbildes für Licht jeweils nur einer Farbe empfindlich sind, wobei mindestens eine farbige Zeile vorgesehen ist, **dadurch gekennzeichnet,**
   **dass** die mindestens eine farbige Zeile Lichtempfangspixel (22) aufweist, die für jeweils eine von zwei Grundfarben empfindlich sind, und keine Lichtempfangspixel (22), die für die dritte Grundfarbe empfindlich sind.

2. Codeleser (10) nach Anspruch 1,
   wobei die Steuer- und Auswertungseinheit (24) dafür ausgebildet ist, das Grauwertbild der weißen Zeile zum Lesen der Codes (40) zu verwenden

3. Codeleser (10) nach Anspruch 1 oder 2,
   wobei die Steuer- und Auswertungseinheit (24) dafür ausgebildet ist, das Grauwertbild und ein Farbbild zu erzeugen.

4. Codeleser (20) nach einem der vorhergehenden Ansprüche,
   wobei zwei, drei oder vier Zeilenanordnungen (20a-d) vorgesehen sind, von denen ein oder zwei Zeilenanordnungen weiße Zeilen sind.

5. Codeleser (10) nach einem der vorhergehenden Ansprüche,
   wobei die Steuer- und Auswertungseinheit (24) dafür ausgebildet ist, die dritte Grundfarbe mit Hilfe der weißen Zeile aus den zwei Grundfarben zu rekonstruieren.

6. Codeleser (10) nach einem der vorhergehenden Ansprüche,
   wobei die zwei Grundfarben rot und blau sind.

7. Codeleser (10) nach einem der vorhergehenden Ansprüche,
   wobei die Lichtempfangspixel (22) innerhalb einer farbigen Zeile für dieselbe Farbe empfindlich sind.

8. Codeleser (10) nach einem der vorhergehenden Ansprüche,
   wobei die Lichtempfangspixel (22) innerhalb einer farbigen Zeile für unterschiedliche Farben empfindlich sind, insbesondere in alternierender Reihenfolge.

9. Codeleser (10) nach einem der vorhergehenden Ansprüche,
   wobei die Steuer- und Auswertungseinheit (24) für eine Farbkorrektur ausgebildet ist, bei der die Signale der zu dem Farbbild beitragenden Lichtempfangspixel (22) je nach Farbe unterschiedlich gewichtet werden.

10. Codeleser (10) nach Anspruch 9,
    wobei die Gewichtung durch unterschiedliche Verstärkungsfaktoren der Zeilenanordnungen (20a-d) und/oder durch Nachbearbeitung eingestellt wird, insbesondere in einem neuronalen Netz.

11. Codeleser (10) nach einem der vorhergehenden Ansprüche,
    wobei die Steuer- und Auswertungseinheit (24) dafür ausgebildet ist, codetragende Objekte (36) und/oder Codebereiche (40) anhand des Farbbildes zu erkennen, zu klassifizieren und/oder vom Bildhintergrund zu unterscheiden.

12. Codeleser (10) nach einem der vorhergehenden Ansprüche,
    wobei das Farbbild eine geringere Auflösung aufweist als das Graubild.

13. Verfahren zum Lesen eines optischen Codes (40), bei dem Bilddaten mit dem Code (40) mit mehreren Zeilenanordnungen (20a-d) von Lichtempfangspixeln (22) zeilenweise aufgenommen werden und der Code (40) in den Bilddaten aufgefunden und ausgelesen wird, wobei die Lichtempfangspixel (22) Bilddaten in unterschiedlichen spektralen Bereichen erfassen, wobei eine Bildzeile jeweils mit mindestens einer weißen Zeile und mindestens einer farbigen Zeile aufgenommen wird, wobei eine weiße Zeile eine Zeilenanordnung (20a-d) ist, deren Lichtempfangspixel (22) weißes Licht aufnehmen, und eine farbige Zeile eine Zeilenanordnung (20a-d) ist, deren Lichtempfangspixel Licht jeweils nur einer Farbe aufnehmen,
**dadurch gekennzeichnet**,
die Lichtempfangspixel (22) der mindestens einen farbige Zeile für jeweils eine von zwei Grundfarben empfindlich sind und keine Lichtempfangspixel (22) der farbigen Zeilen für die dritte Grundfarbe empfindlich sind.

**Claims**

1. A code reader (10) for reading an optical code (40), comprising a line-shaped image sensor (18) having a plurality of line arrangements (20a-d) of light receiving pixels (22) for acquiring image data including the code (40), and a control and evaluation unit (24) configured to find the code (40) in the image data and to read out the code (40), wherein the light receiving pixels (22) have a different spectral sensitivity, wherein at least one line arrangement (20a-d) is a white line whose receiving pixels (22) are sensitive to white light for acquiring a gray scale image, and the other line arrangements (20a-d) are color lines whose receiving pixels (22) are sensitive to light of only one respective color for acquiring a color image, wherein at least one color line is provided, **characterized in that** the at least one color line comprises light-receiving pixels (22) that are each sensitive to one of two primary colors, and no light-receiving pixels (22) that are sensitive to the third primary color.

2. The code reader (10) according to claim 1, wherein the control and evaluation unit (24) is configured to use the gray scale image of the white line for reading the codes (40).

3. The code reader (10) according to claim 1 or 2, wherein the control and evaluation unit (24) is configured to generate the grayscale image and a color image.

4. The code reader (20) according to any of the preceding claims, wherein two, three or four line arrangements (20a-d) are provided, with one or two of the line arrangements being white lines.

5. The code reader (10) according to any of the preceding claims,

wherein the control and evaluation unit (24) is configured to reconstruct the third primary color from the two primary colors using the white line.

6. The code reader (10) according to any of the preceding claims, wherein the two primary colors are red and blue.

7. The code reader (10) according to any of the preceding claims, wherein the light receiving pixels (22) within a color line are sensitive to the same color.

8. The code reader (10) according to any of the preceding claims, wherein the light receiving pixels (22) within a color line are sensitive to different colors, in particular in alternating order.

9. The code reader (10) according to any of the preceding claims, wherein the control and evaluation unit (24) is configured for a color correction wherein the signals of the light receiving pixels (22) contributing to the color image are weighted differently depending on the color.

10. The code reader (10) according to claim 9, wherein the weighting is adjusted by different amplification factors of the line arrangements (20a-d) and/or by post-processing, in particular in a neural network.

11. The code reader (10) according to any of the preceding claims, wherein the control and evaluation unit (24) is configured to detect, classify and/or distinguish code-bearing objects (36) and/or code areas (40) from the image background based on the color image.

12. The code reader (10) according to any of the preceding claims, wherein the color image has a lower resolution than the gray image.

13. A method for reading an optical code (40), wherein image data including the code (40) are acquired line by line using a plurality of line arrangements (20a-d) of light-receiving pixels (22), and the code (40) is found in the image data and read out, the light-receiving pixels (22) detecting image data in different spectral ranges, wherein a respective image line is acquired using at least one white line and at least one color line, a white line being a line arrangement (20a-d) whose light-receiving pixels (22) receive white light, and a color line being a line arrangement (20a-d) whose light-receiving pixels receive light of only one respective color, **characterized in that** the light-receiving pixels (22) of the at least one color line are each sensitive to one of two primary colors, and no light-receiving pixels (22) of the color lines are sensitive to the third primary color.

**Revendications**

1. Lecteur de code (10) pour lire un code optique (40), comprenant un capteur d'image (18) en forme de ligne ayant plusieurs agencements en lignes (20a-d) de pixels de réception de lumière (22) pour enregistrer des données d'image avec le code (40), et une unité de commande et d'évaluation (24) qui est réalisée pour trouver et lire le code (40) dans les données d'image, dans lequel les pixels de réception de lumière (22) présentent une sensibilité spectrale différente, au moins un agencement en ligne (20a-d) est une ligne blanche dont les pixels de réception (22) sont sensibles à la lumière blanche pour enregistrer une image en niveaux de gris, et les autres agencements en lignes (20a-d) sont des lignes en couleur dont les pixels de réception (22) sont sensibles à la lumière d'une seule couleur respective pour enregistrer une image en couleur, il est prévu au moins une ligne en couleur,
**caractérisé en ce que**
ladite au moins une ligne en couleur présente des pixels de réception de lumière (22) sensibles respectivement à l'une des deux couleurs primaires, et ne présente pas de pixels de réception de lumière (22) sensibles à la troisième couleur primaire.

2. Lecteur de code (10) selon la revendication 1, dans lequel l'unité de commande et d'évaluation (24) est réalisée pour utiliser l'image en niveaux de gris de la ligne blanche pour lire les codes (40).

3. Lecteur de code (10) selon la revendication 1 ou 2, dans lequel l'unité de commande et d'évaluation (24) est réalisée pour générer l'image en niveaux de gris et une image en couleur.

4. Lecteur de code (20) selon l'une des revendications précédentes, dans lequel il est prévu deux, trois ou quatre agencements en lignes (20ad), dont un ou deux agencements en lignes sont des lignes blanches.

5. Lecteur de code (10) selon l'une des revendications précédentes, dans lequel l'unité de commande et d'évaluation (24) est réalisée pour reconstruire la troisième couleur primaire à l'aide de la ligne blanche à partir des deux couleurs primaires.

6. Lecteur de code (10) selon l'une des revendications précédentes, dans lequel les deux couleurs primaires sont le rouge et le bleu.

7. Lecteur de code (10) selon l'une des revendications précédentes, dans lequel les pixels de réception de lumière (22) à l'intérieur d'une ligne en couleur sont sensibles à la même couleur.

8. Lecteur de code (10) selon l'une des revendications précédentes, dans lequel les pixels de réception de lumière (22) à l'intérieur d'une ligne en couleur sont sensibles à différentes couleurs, en particulier dans un ordre alterné.

9. Lecteur de code (10) selon l'une des revendications précédentes, dans lequel l'unité de commande et d'évaluation (24) est réalisée pour une correction des couleurs où les signaux des pixels de réception de lumière (22) contribuant à l'image en couleur sont pondérés différemment selon la couleur.

10. Lecteur de code (10) selon la revendication 9, dans lequel la pondération est réglée par des facteurs d'amplification différents des agencements en lignes (20a-d) et/ou par un post-traitement, en particulier dans un réseau neuronal.

11. Lecteur de code (10) selon l'une des revendications précédentes, dans lequel l'unité de commande et d'évaluation (24) est réalisée pour reconnaître des objets porteurs de code (36) et/ou des zones de code (40) à partir de l'image en couleur, pour les classer et/ou pour les distinguer de l'arrière-plan de l'image.

12. Lecteur de code (10) selon l'une des revendications précédentes, dans lequel l'image en couleur présente une résolution inférieure à celle de l'image grise.

13. Procédé de lecture d'un code optique (40), dans lequel des données d'image comprenant le code (40) sont enregistrées ligne par ligne avec plusieurs agencements en lignes (20a-d) de pixels de réception de lumière (22), et le code (40) est trouvé dans les données d'image et lu, dans lequel les pixels de réception de lumière (22) détectent des données d'image dans différentes plages spectrales, une ligne d'image respective ayant au moins une ligne blanche et au moins une ligne en couleur est enregistrée, une ligne blanche est un agencement en ligne (20a-d) dont les pixels de réception de lumière (22) enregistrent de la lumière blanche, et une ligne en couleur est un agencement en ligne (20a-d) dont les pixels de réception de lumière enregistrent de la lumière d'une seule couleur respective, **caractérisé en ce que**
les pixels de réception de lumière (22) de ladite au moins une ligne en couleur sont sensibles respectivement à l'une des deux couleurs primaires, et aucun pixel de réception de lumière (22) des lignes en couleur n'est sensible à la troisième couleur primaire.

Figur 1

Figur 2

## Figur 3

18

R R R R R R R R R R R — 20a
B B B B B B B B B B B — 20b
— 20c

22

## Figur 4

18

R R R R R R R R R R R — 20a
B B B B B B B B B B B — 20b
— 20c
— 20d

22

## Figur 5

18

B R B R B R B R B R B — 20a
— 20b

22

## Figur 6

18

R B R B R B R B R B R — 20a
R B R B R B R B R B R — 20b
— 20c
— 20d

22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015116568 A1
- EP 3012778 A2
- EP 3383026 A1
- EP 2261837 A2
- US 20040196514 A1